# EUROPEAN PATENT SPECIFICATION

(11) **EP 4 500 785 B1**
(45) Date of publication and mention of the grant of the patent: **29.04.2026**
(21) Application number: 23709418.0
(22) Date of filing: 09.03.2023
(51) Int. Cl.: H04L 9/32, H04L 9/40

(54) **METHOD FOR ENROLLING A PUBLIC KEY ON A SERVER**
VERFAHREN ZUM REGISTRIEREN EINES ÖFFENTLICHEN SCHLÜSSELS AUF EINEM SERVER
PROCÉDÉ D'INSCRIPTION D'UNE CLÉ PUBLIQUE SUR UN SERVEUR

(30) Priority: 28.03.2022 EP 22305390
(43) Date of publication of application: 05.02.2025
(73) Proprietor: THALES DIS FRANCE SAS, 92190 Meudon (FR)
(72) Inventor: MARTIN, Alain, 92190 Meudon (FR)
(74) Representative: Grevin, Emmanuel
(86) International application number: PCT/EP2023/055971
(87) International publication number: WO 2023/186480

(56) References cited:
- EP-A1- 3 288 214
- US-A- 5 790 677
- US-A1- 2014 289 129

## Description

### (Field of the invention)

The present invention relates to methods for enrolling the public key of a card on a server. It relates particularly to methods of securely enrolling the public key of a payment card on a remote server.

### (Background of the invention)

Smart cards are portable small devices comprising a memory, a processor unit and an operating system for computing treatments. They may comprise services applications like payment or telecom applications. Smart cards include secure elements comprising a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, physical smartcards have limited computing resources and limited memory resources and they are intended to connect a host machine which may provide them with electric power either in contact mode or contactless mode.

Smart cards may be digitalized in a host electronic device. For instance, a digital smart card (also called digital card) may be stored in a smartphone.

A payment card may participate to a payment transaction for providing a connected terminal with an authorization to conduct an applicative transaction. For example, the applicative transaction may be a payment carried out via a Point-Of-Sale (POS) terminal.

Conventional POS terminals are devices designed to interface with payment cards to make electronic funds transfers. A POS terminal allows getting the agreement of both the bank and the customer in order to perform the payment transaction. A POS terminal typically comprises a display, a keypad allowing customers to type their PIN code or password, a communication interface for coupling with a payment card and a network connection to access the payment authority (like a bank server) for authorization. Conventional POS terminals may be connected to electronic cash registers that provide them with the amount of the payment transaction and possibly other metadata.

Electronic cash registers allow the merchant to enter the amount of the transaction and may be equipped with a printer intended to provide a receipt to the customer after a purchase has been done.

### (Summary of the Invention)

A key pair comprising a private key and an associated public key can be uniquely allocated to a payment card. It may be necessary to register the public key of a payment card in a distant server during a preliminary phase in order to be able to establish a secure link between the payment card and the remote server during a later phase. Unfortunately, deployment of a large number of payment cards makes complex and heavy the conventional registration of many public keys (corresponding to as many cards) in one or more servers.

There is a need to improve the way to register the public key of a payment card in a remote server in a secure manner.

The invention aims at solving the above-mentioned technical problem.

An object of the present invention is a method for enrolling a public key of a payment card in a remote server. The payment card embeds a private key and a certificate comprising the public key. The method comprises the following steps:
- Operating a payment transaction involving a POS terminal and the payment card by performing an off-line data authentication during which the POS terminal receives from the payment card the certificate and verifies the genuineness of said certificate,
- Receiving by the POS terminal a card identifier which has been permanently allocated to the payment card,
- Only if the genuineness of the certificate has been successfully verified, forming by the POS terminal a trusted data by uniquely binding said card identifier and public key, said trusted data comprising said card identifier and public key,
- Sending the trusted data from the POS terminal to the remote server, and
- Enrolling the public key by storing the trusted data in a memory of the remote server.

Advantageously, the payment card may be a physical card and the card identifier may be a Primary Account Number

Advantageously, the payment card may be a physical a digital card hosted in a terminal equipment and the card identifier may be a Token.

Advantageously, the payment card may be either a physical card or a digital card hosted in a terminal equipment and the card identifier may be a Payment Account Reference.

Advantageously, the POS terminal may send the trusted data to the remote server through an Electronic Cash Register.

Advantageously, the POS terminal may receive an expiry date permanently allocated to the payment card and the POS terminal may send the expiry date to the remote server along with the trusted data.

Advantageously, the POS terminal may send a payment e-receipt to the remote server along with said trusted data.

Advantageously, a Uniform Resource Locator may be assigned by the remote server to both the trusted data and a service provided by the remote server, remotely accessing the service at said Uniform Resource Locator may be subject to user authentication and the user may use the private key stored in the payment card, uniquely associated to said public key, to perform this authentication.

Another object of the present invention is a POS terminal able to operate a payment transaction involving a payment card that comprises a private key and a certificate including a public key of the payment card. The POS terminal is configured to:
- Operate said payment transaction by performing an off-line data authentication during which the POS terminal receives from the payment card the certificate and verifies the genuineness of said certificate,
- Receive a card identifier which has been permanently allocated to the payment card,
- Only if the genuineness of the certificate has been successfully verified, form a trusted data by uniquely binding said card identifier and public key, said trusted data comprising said card identifier and public key,
- Send the trusted data to a remote server for enrollment of the public key on the remote server.

Another object of the present invention is a system comprising a POS terminal according to the invention and a remote server. The remote server is configured to enroll the public key by storing the trusted data in a memory of the remote server.

Advantageously, the system may comprise an Electronic Cash Register and the POS terminal may be configured to send the trusted data to the remote server through the Electronic Cash Register.

Advantageously, the system may comprise a payment card configured to request the POS terminal to operate the payment transaction by performing both an on-line authorization and an off-line data authentication.

Advantageously, the POS terminal may be configured to receive an expiry date permanently allocated to the payment card and to send the expiry date to the remote server along with said trusted data.

Advantageously, the system may be configured to operate said payment transaction by performing both an on-line authorization in addition to said off-line data authentication.

### (Brief description of the drawings)

Other characteristics and advantages of the present invention will emerge more clearly from reading the following description of a number of preferred embodiments of the invention with reference to the corresponding accompanying drawings in which:
- Figure 1 shows an exemplary flow diagram for enrolling in a server a payment card public key according to an example of the invention;
- Figure 2 shows an exemplary flow diagram of for accessing a service provided by a remote server thanks to a payment card public key registered according to an example of the invention; and
- Figure 3 shows a diagram of architecture of a system for managing registration of a payment card public key according to an example of the invention.

### (Detailed description of the preferred embodiments)

The invention may apply to any type of payment card usually associated to a user (i.e. cardholder), in which a public/private key pair has been personalized and intended to contribute to a payment transaction. The smart card may be a physical bank smart card or a digital bank card for instance.

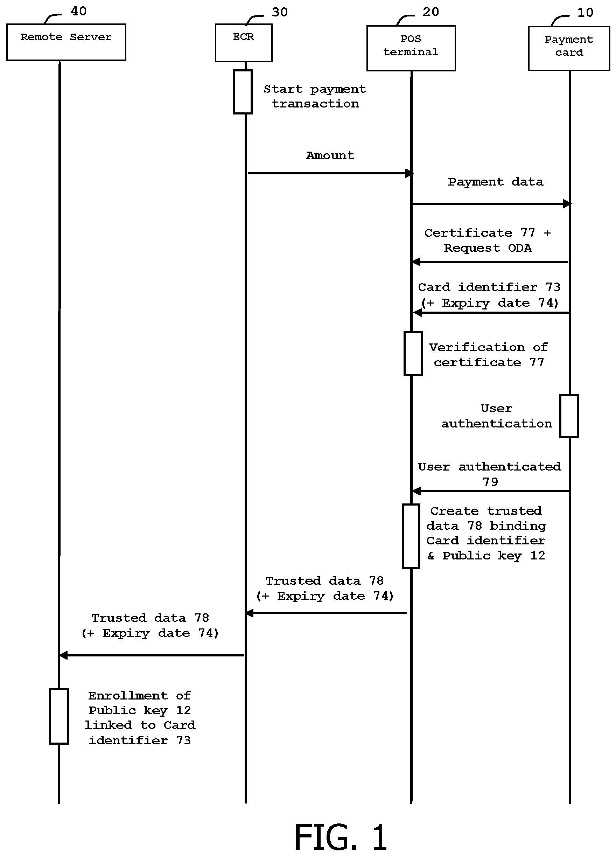

Figure 1 shows an exemplary flow diagram for enrolling the public key of a payment card in a server according to an example of the invention.

In this example, the payment card 10 is a physical banking card intended to be used by its associated user (i.e. bank customer) for payment transaction or cash withdrawal.

The payment card 10 embeds a secure element comprising a hardware processing unit, a memory storing an operating system and a banking application designed to contribute to payment services. The payment card 10 may be configured to communicate through a contact or contactless communication protocol. A public/private keys pair has been stored in the memory of the payment card 10. The public/private keys pair may have been generated using conventional ways and stored in the payment card during a personalization phase performed before the issuance of the payment card.

The payment card comprises a card identifier 73 uniquely and permanently allocated to the payment card. For instance, the card identifier 73 may be a Primary Account Number (PAN) as defined by ISO/IEC 7812 standard.

Preferably, the payment card 10 comprises a certificate 77 including the public key 12.

In some embodiments, the method for enrolling the public key 12 in a remote server 40 may start when a payment transaction involving a POS terminal 20 and the payment card 10 is operated. This action is done by performing an off-line data authentication during which the POS terminal receives from the payment card the certificate 77 and the card identifier 73 allocated to the payment card. The POS terminal verifies the genuineness (i.e. validity) of the received certificate 77.

The POS terminal checks the certificate received from the payment card. The POS terminal may use a pre-installed root certificate provided by a trusted entity in order to check the validity of the certificate 77 of the card.

Preferably, the card may check the agreement of the user to enroll the public key 12 in the remote server 40 by authenticating the user through a conventional verification. For instance, the card may check a PIN code entered by the user via an interface of the POS terminal (and sent to the card) or a biometric data (like a fingerprint) captured by the card itself. Then the card may send a confirmation message 79 to the POS terminal reflecting the fact that the card has successfully authenticated the user.

Alternatively, the payment card 10 may be a digital card hosted in a terminal equipment 50 (like a smartphone, a Personal Digital Assistant or a tablet PC for example). The terminal equipment may capture the biometric data (like a fingerprint) and may submit it to the digital card. Then the digital card may check the agreement of the user to enroll the public key 12 in the remote server 40 by checking the validity of the captured biometric data.

Only if the genuineness (e.g. validity) of the certificate 77 has been successfully verified, the POS terminal forms a trusted data 78 by uniquely binding the card identifier 73 and the public key 72. The trusted data 78 comprises both the card identifier 73 and the public key 12.

The card identifier 73 may be a reference assigned to a bank account associated to the payment card 10 or an identifier of the payment card itself.

Then the POS terminal sends the trusted data 78 to the remote server 40. The trusted data 78 can be sent via a direct channel between the POS terminal 20 and the remote server 40 or through an electronic cash register (ECR) placed between the POS terminal 20 and the remote server 40.

Then the remote server 40 enrolls the public key 12 by storing the trusted data 78 in its memory or a memory it controls.

In some embodiments, an on-line authentication may be performed in addition to the off-line data authentication in order to strengthen the checks.

Turning back to the details shown at Fig. 1, in some embodiments, after the start of a payment transaction, a Electronic Cash Register (ECR) 30 of a merchant may send a first message comprising the amount of the payment transaction to a POS terminal 20. The first message may also comprise additional transaction data like the name of the merchant, the place, the date or other parameters. Although presented as two distinct hardware devices, the ECR and the POS terminal may be merged in a single hardware machine.

The reception of the first message can trigger the sending by the POS terminal 20 of second message to the payment card 10. The second message aims at retrieving parameters specifying the security checking(s) to be carried out for authorizing the pending transaction. The second message may comprise the amount of the payment transaction and other transaction data like the name of the merchant, the place, the date or other parameters.

In response, the payment card may send back to the POS terminal a third message comprising the certificate 77, and a request for an Offline Data Authentication (ODA).

The payment card may send to the POS terminal a fourth message comprising the card identifier 73. The fourth message may contain additional data as will be explained later. In some variants, the content of the fourth message may be included in the third message.

The POS terminal checks the certificate 77 received from the payment card. The POS terminal may perform the check of the validity of the certificate 77 as part of a conventional ODA as defined by the EMVCo standards (Book 2, Security and Key Management).

The POS terminal creates a trusted data 78 only if the genuineness (e.g. validity) of the certificate 77 has been successfully verified. The POS terminal may build the trusted data 78 by uniquely binding the card identifier 73 and the public key 72. The trusted data 78 comprises both the card identifier 73 and the public key 12.

In some embodiments, the third message comprises a request for an Online Authentication and the POS terminal creates the trusted data 78 only after successfully getting an online authorization from an Issuer authorization entity (not shown at Fig. 1) according to conventional mechanisms and in addition to the certificate verification according to ODA mechanism. For instance, the POS terminal may request the online authorization from a remote server managed by the issuer of the payment card (i.e. the bank that issued the payment card). Thus, the POS terminal can be sure that the user of the payment card (and the payment card itself) has been authenticated by a trusted entity, namely the Issuer authorization entity and that the payment card is genuine.

Then the POS terminal may send the built trusted data 78 to the remote server 40 through the electronic cash register (ECR) 30.

Upon receipt of the trusted data 78, the remote server 40 may enroll the public key 12 by storing the trusted data 78 in its memory. This memory may be embedded in the remote server or remotely controlled by the remote server.

Thanks to some embodiments of the invention, the POS terminal creates a trusted association between the card identifier 73 and the public key 12 such that the remote server can benefit from the guarantee that the enrolled public key 12 is really that of the payment card 10.

In some embodiments, the remote server 40 may uniquely assign a Uniform Resource Locator (URL) 72 to both the trusted data and a service provided by the remote server. The remote server may be configured to authorize remote access to the service at said Uniform Resource Locator only if the entity requesting access to the service can be authenticated. The entity may use the private key 13 (that is uniquely associated to the public key 12) stored in the payment card 10 to perform the required authentication.

For instance, the service may be the delivery of one or more documents associated with a specific payment card. The document(s) may be a till receipt or an e-ticket attached to a payment transaction previously carried out using the payment card. The URL 72 may have any appropriate structure as people skilled in the art know. For instance, the URL may be:
https://www.e-cardservices.com/?document=k87m1dk23x1m Preferably, each service provided by the remote server has a unique URL allocated to a given payment card.

In some embodiments, the payment card 10 may comprise its own expiry date 74 (i.e. and expiry date permanently allocated to the payment card) and may include the expiry date 74 in a message (like the fourth message for instance) sent to the POS terminal. In turn, the POS terminal may attach the expiry date 74 to the trusted data 78 and send to the remote server (directly or via the ECR) the expiry date 74 along with the trusted data 78. The remote server 40 may be configured to associate the received expiry date 74 to the relevant URL (E.g. URL 72 associated with the payment card).

The server 40 may use the expiry date 74 as metadata to be checked before authorizing access to the target service linked to the URL 72. For example, the remote server 40 may check the received expiry date 74 and authorize access to the service only if the access request contains an expiry date that matches (is the same as) the expiry date 74 which has been registered in the server 40.

In some embodiments, the payment card 10 may be a physical card and the card identifier may be a Primary Account Number or a card serial number.

In some embodiments, the payment card 10 may be a digital card hosted in a terminal equipment (like a smartphone, a Personal Digital Assistant or a tablet PC for example) and the card identifier may be a Token as specified by EMVCo specifications. (For example EMV^{®} Payment Tokenisation Specification - Technical Framework v2.2).

In some embodiments, the payment card 10 may be either a physical card or a digital card hosted in a terminal equipment and the card identifier may be a Payment Account Reference (PAR) as defined by EMVCo specifications.

In some embodiments, the POS terminal may send to the remote server a payment till e-receipt associated to the payment transaction along with said trusted data.

The remote server 40 may be operated by the merchant, the merchant's acquiring bank or any third party that provides relevant digitization services to the merchant.

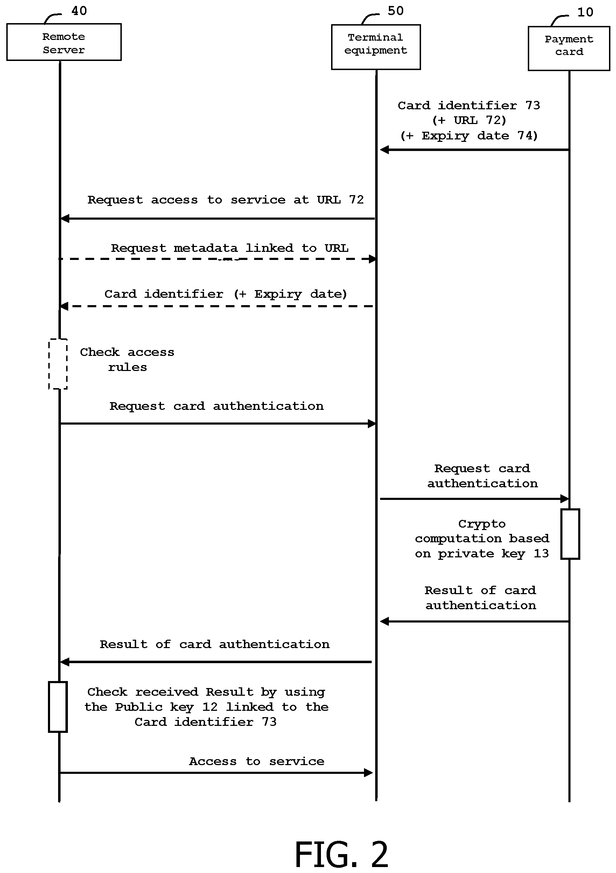

Figure 2 shows an exemplary flow diagram for accessing a service provided by a remote server thanks to a payment card public key previously registered according to an example of the invention.

In this example, the payment card 10 is a digital banking card hosted in a terminal equipment 50 (like a smartphone) and the service (provided by the server) is providing access to a target document (attached to the payment card 10) that is assumed to have been stored in the remote server **40.**

The public key 12 of the payment card 10 is assumed to have been enrolled in the remote server 40 according to the invention during a previous phase.

At a first step, a user selects on the terminal equipment 50 an action aiming at retrieving the target document from the remote server 40. In response, the terminal equipment requests the payment card 10 to provide elements required to build an appropriate access request for the server 40.

At a next step, the payment card 10 provides the terminal equipment 50 with the card identifier 73 and possibly the URL 72 associated with the target document.

In some embodiments, the URL 72 associated with the target document may have been previously stored in the terminal equipment 50. In some examples, the URL 72 may have been identified and shared between the terminal equipment 50 and the remote server 40 during a previous pairing operation. In some other examples, the URL 72 may have been identified by the server 40 then sent to the payment card (through the POS terminal and possibly the ECR) during the payment transaction.

The terminal equipment 50 may be a portable electronic device like a mobile phone, a laptop or a tablet PC for instance.

The terminal equipment 50 comprises an application which is configured to get the card identifier 73 (and possible the URL 72 of the target service and associated metadata like the card expiry date) from the payment card 10. The application is also configured to build and send a request for accessing the target service to the remote server 40.

Upon receipt of the access request, the remote server 40 may be configured to check access rule(s) in order to deny unwanted attempts to access the target service. To this end, the server 40 may send to the terminal equipment 50 a request to get metadata linked to the target service (or to the target URL). The terminal equipment 50 may return to the server 40 the card identifier 73 and possibly the card expiry date 74. Then the server 40 may check that the received card identifier 73 is the same as the card identifier previously enrolled for the target service during the flow of Figure 1 for instance. In case of unsuccessful checking, the server 40 may deny access to the service. Similarly, the expiry date of the smart card may be used for an additional metadata check before authorizing access to the service.

In case of successful checking, another check can be performed in addition to (or instead of) the previous check(s). The server 40 may send to terminal equipment 50 a request to authenticate the payment card. In turn, the terminal equipment 50 may send a request for card authentication to the payment card 10. The request may contain a seed or a challenge (like a random value). On receipt of the card authentication request, the payment card 10 computes a result using both the received seed/challenge and its own private key 13. Then the card sends the computed result to the terminal equipment 50 that forward this result to the server 40.

Upon receipt of the result, the remote server 40 checks the validity of the result by using both the seed/challenge and the enrolled public key 12 that has been associated with the target service (or URL or card identifier).

In case of successful check, the server authorizes the terminal equipment 50 to access the target service. For instance, a document (or a group of data) attached to payment card 10 the may be sent to the terminal equipment.

The metadata used to control access to the service may also contain the location of the terminal equipment (to restrict access from a terminal equipment located in a specific country for instance) or a fingerprint of the terminal equipment assumed to have been previously registered in the remote server 40.

In some embodiments, the payment card may be a hardware smart card securely paired to the terminal equipment 50. The payment card 10 and the terminal equipment 50 may communicate through a contactless protocol relying on Near-Field-Communication (NFC) or Bluetooth Low Energy (BLE) technology. Alternatively, the card 10 and the terminal equipment 50 may communicate through a contact protocol provided that the terminal equipment 50 includes a card reader or can be connected to a card reader.

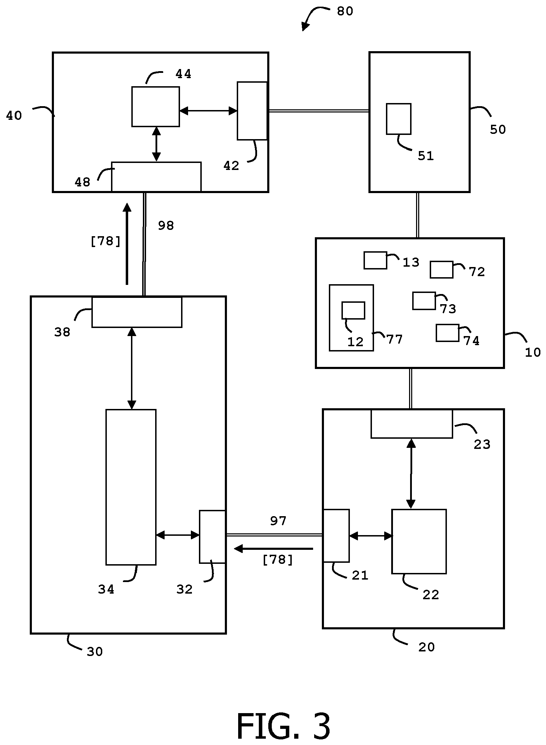

Figure 3 shows a diagram of architecture of a system for managing registration of a payment card public key according to an example of the invention.

The payment card 10 comprises a private key 13/public key 12 pair assigned to the payment card. The payment card 10 comprises a card identifier 73 (and possibly an expiry date 74) and a certificate 77 including the public key 12. The smart card 10 may be configured to send the card identifier 73 (and expiry date 74) to a coupled POS terminal during conventional data exchanges with the POS terminal.

As conventional Point-of-sale terminals, the POS terminal 20 is able to operate a payment transaction involving a payment card. The POS terminal comprises a first communication interface 23 allowing exchanging data with the payment card 10. The POS terminal comprises a second communication interface 21 allowing exchanging data with an electronic cash register or a network allowing reaching the remote server 40.

The POS terminal comprises a processing manager 22 configured to operate a payment transaction by performing both an on-line authorization and/or an off-line data authentication during which the POS terminal receives, from the payment card, the card certificate and verifies the genuineness (i.e. validity) of the card certificate.

The processing manager 22 checks the certificate 77 received from the coupled payment card. The processing manager 22 may use a pre-installed root certificate 24 provided by a trusted entity in order to check the validity of the certificate 77 of the card.

The processing manager 22 is configured to build a trusted data 78 by uniquely binding the card identifier received from the coupled payment card and the public key of the coupled payment card only if the genuineness of the certificate has been successfully verified. By creating the created trusted data, the POS terminal uniquely binds the card identifier and the card public key. The created trusted data 78 contains the card identifier 73 and the linked card public key 12.

The processing unit 22 is configured send the created trusted 78 data to the remote server 40 for enrollment of the card public key 12 on the remote server.

In some embodiment, the system 80 comprises the POS terminal 20 and the remote server 40.

The remote server 40 comprises a first communication interface 42 allowing exchanging data with a terminal equipment 50, like a phone or the computer of a user. The remote server 40 comprises a second communication interface 48 allowing exchanging data with an electronic cash register or a network allowing reaching the POS terminal 20. The remote server comprises a computing manager 44 configured to enroll a public key (belonging to a trusted data received from the POS terminal 20) by storing the received trusted data in a memory controlled by the remote server.

The processing manager 44 may be configured to generate an URL when needed or to select an URL in a set of pre-generated URLs. The processing manager 44 is configured to make a service associated with a given payment card accessible at the Uniform Resource Locator associated with the given payment card. The processing manager 44 may be configured to allocate a unique URL to each managed service or payment card.

The first and second communication interfaces 42 and 48 may be merged in a single one.

In addition to the above-presented POS terminal 20 and remote server 40, in some embodiments, the system 80 may comprise an Electronic Cash Register (ECR) 30 configured to forward to the remote server 30 the trusted data received from the POS terminal 20. The ECR 30 comprises a first communication interface 32 allowing exchanging data with the POS terminal 20 and a second communication interface 38 allowing exchanging data with the remote server 40. The ECR 30 may comprise a computing manager 34 configured to operate internal treatments needed to securely convey the trusted data from the POS terminal to the remote server.

The first and second communication interfaces 32 and 38 may be merged in a single one.

The computing manager 34 may be configure to convey an URL selected by the server 40 to the POS terminal 20 during a payment transaction so that the POS terminal may communicate the selected URL to the payment card 10.

It should be understood that each of the processing managers of the POS terminal 20, the server 40 and the ECR 30 may be implemented as software application (relying on at least on hardware processor and a physical memory), a hardware component or a combination of both.

In some embodiments, the POS terminal 20, the server 40 and the ECR 30 may have been pre-provisioned in pairs with one or more sets of key(s) allowing them to establish secure communication channels (97, 98) in pairs.

In some embodiments, the system 80 may also comprise the terminal equipment 50 that comprises an application 51 adapted to retrieve the card identifier 73 and additional metadata like the associated URL 72 and the card expiry date 74) from the payment card 10.

In some embodiments, the payment card 10 is configured to request the POS terminal to operate the payment transaction by performing both an on-line authorization and an off-line data authentication.

In some embodiments, the payment card may be a physical card and the card identifier is a Primary Account Number. The payment card may have a form factor of conventional smartcard, an electronic bracelet or an electronic watch.

In some embodiments, the payment card may be a digital card hosted in the terminal equipment 50 and the card identifier may be a Token.

In some embodiments, the payment card may be either a physical card or a digital card hosted in the terminal equipment and the card identifier may be a Payment Account Reference.

The payment card 10 may store a set of URLs allocated to as many services provided by one or more remote servers.

The invention is not limited to the described embodiments or examples. In particular, the described examples and embodiments may be combined.

The invention is not limited to Banking smart cards and applies to any payment cards able to participate to a payment transaction.

Thanks to some embodiments of the invention, the public key of a payment card can be securely registered/enrolled in a remote server during a payment transaction in a transparent manner for the cardholder (i.e. without additional action of the cardholder compared to conventional payment transactions).

Thanks to some embodiments of the invention, the public key of a payment card can be securely assigned to a service provided by a remote server so that the service may be made available (at its associated URL) immediately to the user. Thus the cardholder may access the service (e.g. consult the content of a document attached to the payment card like a till e-receipt or an invoice) immediately.

## Claims

1. A method for enrolling a public key (12) of a payment card (10) in a remote server (40), said payment card embedding a private key (13) and a certificate (77) comprising the public key, wherein the method comprises the steps:
- Operating a payment transaction involving a POS terminal (20) and the payment card by performing an off-line data authentication during which the POS terminal receives from the payment card the certificate and verifies the genuineness of said certificate,
- Receiving by the POS terminal a card identifier (73) which has been permanently allocated to the payment card,
- Only if the genuineness of the certificate has been successfully verified, forming by the POS terminal a trusted data by uniquely binding said card identifier and public key, said trusted data comprising said card identifier and public key,
- Sending the trusted data from the POS terminal to the remote server (40), and
- Enrolling the public key by storing the trusted data in a memory of the remote server.

2. The method according to claim 1, wherein the payment card is a physical card and the card identifier is a Primary Account Number or wherein the payment card is a digital card hosted in a terminal equipment (50) and the card identifier is a Token or wherein the payment card is either a physical card or a digital card hosted in a terminal equipment and the card identifier is a Payment Account Reference.

3. The method according to claim 1, wherein the POS terminal sends the trusted data to the remote server through an Electronic Cash Register (30).

4. The method according to claim 1, wherein the POS terminal receives an expiry date (74) permanently allocated to the payment card and wherein the POS terminal sends the expiry date to the remote server (40) along with said trusted data.

5. The method according to claim 1, wherein the POS terminal sends a payment e-receipt (75) to the remote server along with said trusted data.

6. The method according to claim 1, wherein a Uniform Resource Locator (72) is assigned by the remote server to the trusted data and a service provided by the remote server, wherein remotely accessing the service at said Uniform Resource Locator is subject to user authentication and wherein the user uses the private key (13) stored in the payment card, uniquely associated to said public key, to perform this authentication.

7. A POS terminal (20) able to operate a payment transaction involving a payment card (10) comprising a certificate including a public key (12) of the payment card, wherein the POS terminal is configured to:
- Operate said payment transaction by performing an off-line data authentication during which the POS terminal receives from the payment card the certificate and verifies the genuineness of said certificate,
- Receive a card identifier (73) which has been permanently allocated to the payment card,
- Only if the genuineness of the certificate has been successfully verified, form a trusted data by uniquely binding said card identifier and public key, said trusted data comprising said card identifier and public key,
- Send the trusted data to a remote server (40) for enrollment of the public key on the remote server.

8. A system (80) comprising a POS terminal according to claim 7 and a remote server (40), wherein the remote server is configured to enroll the public key by storing the trusted data in a memory of the remote server.

9. A system (80) according to claim 8, wherein the system comprises an Electronic Cash Register (30) and wherein the POS terminal is configured to send the trusted data to the remote server through the Electronic Cash Register.

10. A system (80) according to claim 8, wherein the system comprises a payment card (10) configured to request the POS terminal to operate the payment transaction by performing both an on-line authorization and an off-line data authentication.

11. The system according to claim 8, wherein the POS terminal is configured to receive an expiry date (74) permanently allocated to the payment card and to send the expiry date to the remote server along with said trusted data.

12. The system according to claim 8, wherein said payment card is a physical card and the card identifier is a Primary Account Number.

13. The system according to claim 8, wherein said payment card is a digital card hosted in a terminal equipment (50) and the card identifier is a Token.

14. The system according to claim 8, wherein said payment card is either a physical card or a digital card hosted in a terminal equipment and the card identifier is a Payment Account Reference.

15. The system according to claim 8, wherein said system is configured to operate said payment transaction by performing both an on-line authorization in addition to said off-line data authentication.

## Patentansprüche

1. Verfahren zum Aufnehmen eines öffentlichen Schlüssels (12) einer Zahlungskarte (10) in einen entfernten Server (40), wobei die Zahlungskarte einen privaten Schlüssel (13) und ein Zertifikat (77) einbettet, umfassend den öffentlichen Schlüssel,
wobei das Verfahren die Schritte umfasst:
- Bearbeiten einer Zahlungstransaktion unter Beteiligung eines POS-Terminals (20) und der Zahlungskarte durch ein Durchführen einer Offline-Datenauthentifizierung, während der das POS-Terminal von der Zahlungskarte das Zertifikat empfängt und die Echtheit des Zertifikats verifiziert,
- Empfangen durch das POS-Terminal einer Kartenkennung (73), die der Zahlungskarte dauerhaft zugewiesen wurde,
- nur falls die Echtheit des Zertifikats erfolgreich verifiziert wurde, Ausbilden durch das POS-Terminal von vertrauenswürdigen Daten durch ein eindeutiges Binden der Kartenkennung und des öffentlichen Schlüssels, die vertrauenswürdigen Daten umfassend die Kartenkennung und den öffentlichen Schlüssel,
- Senden der vertrauenswürdigen Daten von dem POS-Terminal an den entfernten Server (40), und
- Aufnehmen des öffentlichen Schlüssels durch ein Speichern der vertrauenswürdigen Daten in einem Speicher des entfernten Servers.

2. Verfahren nach Anspruch 1, wobei die Zahlungskarte eine physische Karte ist und die Kartenkennung eine Primäre Kontonummer ist oder wobei die Zahlungskarte eine digitale Karte ist, die in einem Endgerät (50) gehostet wird, und die Kartenkennung ein Token ist oder wobei die Zahlungskarte entweder eine physische Karte oder eine digitale Karte ist, die in einem Endgerät gehostet wird, und die Kartenkennung eine Zahlungskontoreferenz ist.

3. Verfahren nach Anspruch 1, wobei das POS-Terminal die vertrauenswürdigen Daten über eine elektronische Registrierkasse (30) an den entfernten Server sendet.

4. Verfahren nach Anspruch 1, wobei das POS-Terminal ein Ablaufdatum (74) empfängt, das der Zahlungskarte dauerhaft zugewiesen ist, und wobei das POS-Terminal das Ablaufdatum zusammen mit den vertrauenswürdigen Daten an den entfernten Server (40) sendet.

5. Verfahren nach Anspruch 1, wobei das POS-Terminal eine elektronische Zahlungsquittung (75) zusammen mit den vertrauenswürdigen Daten an den entfernten Server sendet.

6. Verfahren nach Anspruch 1, wobei ein Uniform Resource Locator (72) durch den entfernten Server den vertrauenswürdigen Daten und einem Dienst zugeteilt ist, der durch den entfernten Server bereitgestellt ist, wobei ein entferntes Zugreifen auf den Dienst an dem Uniform Resource Locator einer Benutzerauthentifizierung unterliegt und wobei der Benutzer den privaten Schlüssel (13), der in der Zahlungskarte gespeichert ist, eindeutig dem öffentlichen Schlüssel zugeordnet, benutzt, um diese Authentifizierung durchzuführen.

7. POS-Terminal (20), das in der Lage ist, eine Zahlungstransaktion unter Verwendung einer Zahlungskarte (10) zu bearbeiten, umfassend ein Zertifikat, das einen öffentlichen Schlüssel (12) der Zahlungskarte einschließt,
wobei das POS-Terminal konfiguriert ist zum:
- Bearbeiten der Zahlungstransaktion durch das Durchführen einer Offline-Datenauthentifizierung, während der das POS-Terminal von der Zahlungskarte das Zertifikat empfängt und die Echtheit des Zertifikats verifiziert,
- Empfangen einer Kartenkennung (73), die der Zahlungskarte dauerhaft zugewiesen wurde,
- nur falls die Echtheit des Zertifikats erfolgreich verifiziert wurde, Ausbilden von vertrauenswürdigen Daten durch das eindeutige Binden der Kartenkennung und des öffentlichen Schlüssels, die vertrauenswürdigen Daten umfassend die Kartenkennung und den öffentlichen Schlüssel,
- Senden der vertrauenswürdigen Daten an einen entfernten Server (40) für die Aufnahme des öffentlichen Schlüssels auf dem entfernten Server.

8. System (80), umfassend ein POS-Terminal nach Anspruch 7 und einen entfernten Server (40), wobei der entfernte Server konfiguriert ist, um den öffentlichen Schlüssel aufzunehmen, durch das Speichern der vertrauenswürdigen Daten in einem Speicher des entfernten Servers.

9. System (80) nach Anspruch 8, wobei das System eine elektronische Registrierkasse (30) umfasst und wobei das POS-Terminal konfiguriert ist, um die vertrauenswürdigen Daten über die elektronische Registrierkasse an den entfernten Server zu senden.

10. System (80) nach Anspruch 8, wobei das System eine Zahlungskarte (10) umfasst, die konfiguriert ist, um das POS-Terminal aufzufordern, die Zahlungstransaktion durch das Durchführen sowohl einer Online-Autorisierung als auch einer Offline-Datenauthentifizierung zu bearbeiten.

11. System nach Anspruch 8, wobei das POS-Terminal konfiguriert ist, um ein Ablaufdatum (74) zu empfangen, das der Zahlungskarte dauerhaft zugewiesen ist, und um das Ablaufdatum zusammen mit den vertrauenswürdigen Daten an den entfernten Server zu senden.

12. System nach Anspruch 8, wobei die Zahlungskarte eine physische Karte ist und die Kartenkennung eine Primäre Kontonummer ist.

13. System nach Anspruch 8, wobei die Zahlungskarte eine digitale Karte ist, die in einem Endgerät (50) gehostet wird, und die Kartenkennung ein Token ist.

14. System nach Anspruch 8, wobei die Zahlungskarte entweder eine physische Karte oder eine digitale Karte ist, die in einem Endgerät gehostet wird, und die Kartenkennung eine Zahlungskontoreferenz ist.

15. System nach Anspruch 8, wobei das System konfiguriert ist, um die Zahlungstransaktion durch das Durchführen sowohl einer Online-Autorisierung zusätzlich zu der Offline-Datenauthentifizierung zu bearbeiten.

## Revendications

1. Procédé permettant d'inscrire une clé publique (12) d'une carte de paiement (10) dans un serveur distant (40), ladite carte de paiement intégrant une clé privée (13) et un certificat (77) comprenant la clé publique,
dans lequel le procédé comprend les étapes consistant à :
- Exécuter une transaction de paiement impliquant un terminal PDV (20) et la carte de paiement en effectuant une authentification de données hors ligne durant laquelle le terminal PDV reçoit en provenance de la carte de paiement le certificat et vérifie l'authenticité dudit certificat,
- Recevoir par le terminal PDV un identifiant de carte (73) qui a été attribué de manière permanente à la carte de paiement,
- Seulement si l'authenticité du certificat a été vérifiée avec succès, former par le terminal PDV des données de confiance en liant de manière unique ledit identifiant de carte et ladite clé publique, lesdites données de confiance comprenant ledit identifiant de carte et ladite clé publique,
- Envoyer les données de confiance du terminal PDV au serveur distant (40), et
- Inscrire la clé publique en stockant les données de confiance dans une mémoire du serveur distant.

2. Procédé selon la revendication 1, dans lequel la carte de paiement est une carte physique et l'identifiant de carte est un numéro de compte principal ou dans lequel la carte de paiement est une carte numérique hébergée dans un équipement terminal (50) et l'identifiant de carte est un jeton ou dans lequel la carte de paiement est soit une carte physique, soit une carte numérique hébergée dans un équipement terminal et l'identifiant de carte est une référence de compte de paiement.

3. Procédé selon la revendication 1, dans lequel le terminal PDV envoie les données de confiance au serveur distant par l'intermédiaire d'une caisse enregistreuse électronique (30).

4. Procédé selon la revendication 1, dans lequel le terminal PDV reçoit une date d'expiration (74) attribuée de manière permanente à la carte de paiement et dans lequel le terminal PDV envoie la date d'expiration au serveur distant (40) conjointement avec lesdites données de confiance.

5. Procédé selon la revendication 1, dans lequel le terminal PDV envoie un reçu électronique de paiement (75) au serveur distant conjointement avec lesdites données de confiance.

6. Procédé selon la revendication 1, dans lequel un localisateur uniforme de ressources (72) est assigné par le serveur distant aux données de confiance et à un service fourni par le serveur distant, dans lequel l'accès à distance au service au niveau dudit localisateur uniforme de ressources est soumis à une authentification d'utilisateur et dans lequel l'utilisateur utilise la clé privée (13) stockée dans la carte de paiement, associée de manière unique à ladite clé publique, pour effectuer cette authentification.

7. Terminal PDV (20) capable d'exécuter une transaction de paiement impliquant une carte de paiement (10) comprenant un certificat comportant une clé publique (12) de la carte de paiement,
dans lequel le terminal PDV est configuré pour :
- Exécuter ladite transaction de paiement en effectuant une authentification de données hors ligne durant laquelle le terminal PDV reçoit en provenance de la carte de paiement le certificat et vérifie l'authenticité dudit certificat,
- Recevoir un identifiant de carte (73) qui a été attribué de manière permanente à la carte de paiement,
- Seulement si l'authenticité du certificat a été vérifiée avec succès, former des données de confiance en liant de manière unique ledit identifiant de carte et ladite clé publique, lesdites données de confiance comprenant ledit identifiant de carte et ladite clé publique,
- Envoyer les données de confiance à un serveur distant (40) pour une inscription de la clé publique sur le serveur distant.

8. Système (80) comprenant un terminal PDV selon la revendication 7 et un serveur distant (40), dans lequel le serveur distant est configuré pour inscrire la clé publique en stockant les données de confiance dans une mémoire du serveur distant.

9. Système (80) selon la revendication 8, dans lequel le système comprend une caisse enregistreuse électronique (30) et dans lequel le terminal PDV est configuré pour envoyer les données de confiance au serveur distant par l'intermédiaire de la caisse enregistreuse électronique.

10. Système (80) selon la revendication 8, dans lequel le système comprend une carte de paiement (10) configurée pour demander au terminal PDV d'exécuter la transaction de paiement en effectuant à la fois une autorisation en ligne et une authentification de données hors ligne.

11. Système selon la revendication 8, dans lequel le terminal PDV est configuré pour recevoir une date d'expiration (74) attribuée de manière permanente à la carte de paiement et pour envoyer la date d'expiration au serveur distant conjointement avec lesdites données de confiance.

12. Système selon la revendication 8, dans lequel ladite carte de paiement est une carte physique et l'identifiant de carte est un numéro de compte principal.

13. Système selon la revendication 8, dans lequel ladite carte de paiement est une carte numérique hébergée dans un équipement terminal (50) et l'identifiant de carte est un jeton.

14. Système selon la revendication 8, dans lequel ladite carte de paiement est soit une carte physique, soit une carte numérique hébergée dans un équipement terminal et l'identifiant de carte est une référence de compte de paiement.

15. Système selon la revendication 8, dans lequel ledit système est configuré pour exécuter ladite transaction de paiement en effectuant à la fois une autorisation en ligne en plus de ladite authentification de données hors ligne.
